# EUROPEAN PATENT APPLICATION

(11) **EP 3 241 676 A1**
(43) Date of publication of application: **08.11.2017**
(21) Application number: 17167746.1
(22) Date of filing: 24.04.2017
(51) Int. Cl.: B32B 27/08, B32B 27/30, G06F 1/16, B32B 7/12, B32B 27/36, A45C 11/00

(54) **SCREEN PROTECTOR**

(30) Priority: 02.05.2016 TW 105206236 U
(71) Applicant: Lin, Chia-Hao, New Taipei City 241 (TW)
(72) Inventor: Lin, Chia-Hao, New Taipei City 241 (TW)
(74) Representative: Sun, Yiming

(57) **Abstract**

A screen protector (20) includes an upper light-pervious substrate (21), a printed layer (22), an adhesive layer (23), and a lower light-pervious substrate (24). The printed layer (22) is disposed at one side of the upper light-pervious substrate (21). The printed layer (22) has a hollow light-pervious area (221). The adhesive layer (23) is disposed at one side of the printed layer (22) opposite the upper light-pervious substrate (21). The adhesive layer (23) is configured to fill the hollow light-pervious area (221) so that one side of the adhesive layer (23), opposite the printed layer (22), is a flat surface. The lower light-pervious substrate (24) is disposed at the side of the adhesive layer (23) opposite the printed layer (22). An edge of the screen protector (20) is provided with a curved section (25) corresponding to a curved surface (6) of an edge of a screen (2). Thereby, the screen protector (20) can be easily and accurately attached to the screen (2) to fully protect the screen (2).

## Description

### FIELD OF THE INVENTION

The present invention relates to a screen protector, and more particularly to a screen protector which can be accurately and quickly attached to a screen and able to protect the curved edge of the screen.

### BACKGROUND OF THE INVENTION

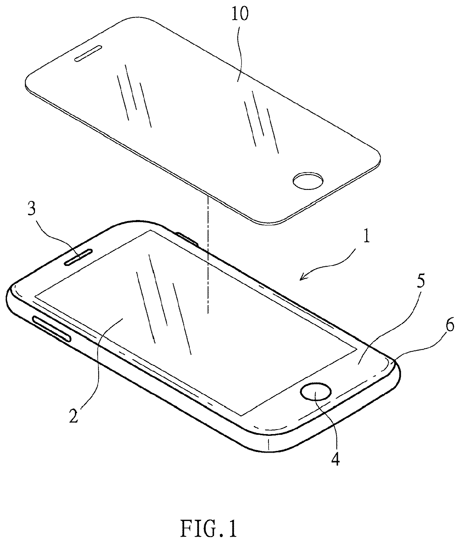

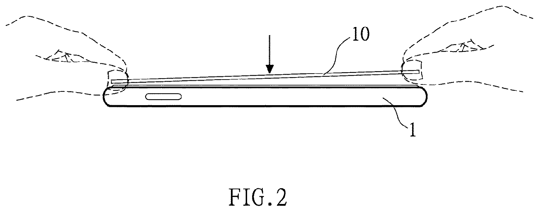

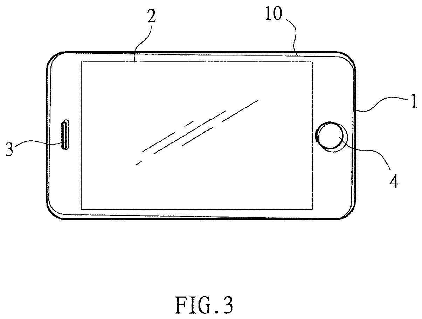

A portable electronic device, such as a smartphone and a tablet, usually provides a screen at a front face for operation. In order to avoid scrapes caused by collision, a screen protector is attached to the screen of the portable electronic device. Preferably, the screen protector is made of a hard material. As shown in FIG. 1 to FIG. 4, an electronic device comprises a screen 2, an earpiece 3, an operation key 4, and the like. The screen protector 10 has corresponding openings. Except the professionals, it is difficult to accurately attach the screen protector 10 to the screen 2. The application of the screen protector 10 needs to be finished in a very short time. When the release film is removed from the bottom of the screen protector, it usually generates static electricity to adsorb the surrounding dust particles. These dust particles will form air bubbles during the application of the screen protector, and it is not easy to remove the air bubbles. When the screen protector 10 is to be attached to the screen, one side of the screen protector 10 is first aligned with one side of the electronic device 1 as shown in FIG. 2. It is not easy to know a misalignment with the naked eyes in the beginning. Sometimes, the openings of the screen protector 10 are significantly not aligned with the corresponding parts of the electronic device 1 (as shown in FIG. 3) to affect the appearance and the functionality of the electronic device.

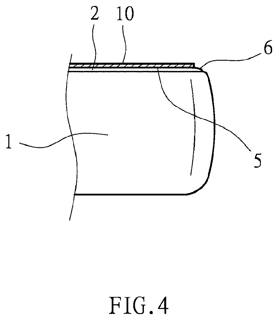

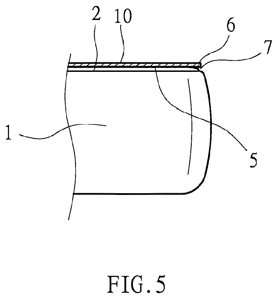

Besides, since the screen 2 of the electronic device 1 is getting larger and larger, in order to enhance the visual effect of the screen 2 and to maintain a better grip, the rim of the electronic device 1 is designed to be curved, and the edge of the screen 2 has a curved surface connected with the rim of the electronic device, thereby improving the appearance of the screen 2 and protecting the screen 2. As shown in FIG. 4 and FIG. 5, the screen protector 10 is directly attached to the screen 2 of the electronic device 1. Because the industry considers the cost, most of screen protectors are designed in the form of a plane. However, since the improved screen 2 is not a flat screen, the screen protector 10 is attached to the middle plane 5 of the screen 2 only. The aforesaid way has some disadvantages.

1. As shown in FIG. 4, the screen protector 10 corresponds in size to the plane 5 of the screen 2. The curved surface 6 at the edge of the screen 2 is exposed, without protection. As a result, the curved surface 6 easily comes into forcible contact with another object to scrape or damage the screen 2.

As shown in FIG. 5, the screen protector 10 is slightly larger than the plane 5 of the screen 2. There is a gap 7 between the screen protector 10 and the curved surface 6 of the screen 2. It is easy to accumulate dust in the gap, and the screen protector 10 may be torn off due to an unexpected collision. Accordingly, the inventor of the present invention has devoted himself based on his many years of practical experiences to solve these problems.

### SUMMARY OF THE INVENTION

In view of the aforesaid shortcomings, the primary object of the present invention is to provide a screen protector which can be attached to a screen easily and conveniently.

In order to achieve the aforesaid object, the screen protector of the present invention comprises an upper light-pervious substrate, a printed layer, an adhesive layer, and a lower light-pervious substrate. The printed layer is disposed at one side of the upper light-pervious substrate. The printed layer has a hollow light-pervious area. The adhesive layer is disposed at one side of the printed layer opposite the upper light-pervious substrate. The adhesive layer is configured to fill the hollow light-pervious area so that one side of the adhesive layer, opposite the printed layer, is a flat surface. The lower light-pervious substrate is disposed at the side of the adhesive layer opposite the printed layer. An edge of the screen protector is provided with a curved section corresponding to a curved surface of an edge of a screen.

In an embodiment, the light-pervious area corresponds in shape to the screen.

In an embodiment, the curved section is bent toward one side of the lower light-pervious substrate opposite the adhesive layer.

In an embodiment, the upper light-pervious substrate and the lower light-pervious substrate are made of poly ethylene terephthalate (PET), polyethylene (PE), polycarbonate (PC), or polyvinyl chloride (PVC).

In an embodiment, the printed layer is formed with various patterns and colors by translucent or opaque pigments.

In an embodiment, the adhesive layer is made of highly transparent and hardenable acrylic, epoxy or silicone by coating.

In an embodiment, the curved section is formed by thermoforming.

Thereby, the screen protector can be easily and accurately attached to the screen to fully protect the screen.

### BRIEF DESCRIPTION OF THE DRAWINGS

FIG. 1 is an exploded view of an electronic device and a conventional screen protector;
FIG. 2 is a schematic view of the electronic device and the conventional screen protector;
FIG. 3 is a schematic view showing a tolerance between the electronic device and the conventional screen protector;
FIG. 4 is a partial sectional view showing the conventional screen protector attached to the electronic device;
FIG. 5 is a partial sectional view showing another status of the conventional screen protector attached to the electronic device;
FIG. 6 is a perspective view of the present invention;
FIG. 7 is a top view of the present invention;
FIG. 8 is a partial sectional view of the present invention; and
FIG. 9 is a partial sectional view of another embodiment of the present invention.

### DETAILED DESCRIPTION OF THE PREFERRED EMBODIMENTS

Embodiments of the present invention will now be described, by way of example only, with reference to the accompanying drawings.

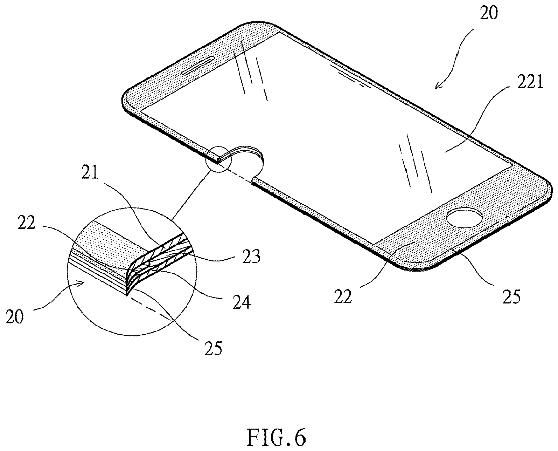

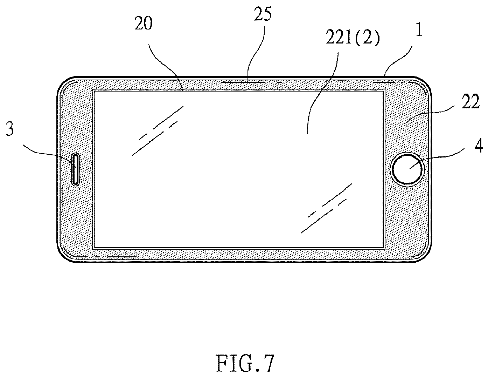

Referring to FIG. 6 to FIG 8, a screen protector 20 comprises an upper light-pervious substrate 21, a printed layer 22, an adhesive layer 23, and a lower light-pervious substrate 24. The printed layer 22 is disposed at one side of the upper light-pervious substrate 21. The printed layer 22 has a hollow light-pervious area 221. The light-pervious area 221 corresponds in shape to a screen 2 of an electronic device 1. The adhesive layer 23 is disposed at one side of the printed layer 22 opposite the upper light-pervious substrate 21. The adhesive layer 23 is configured to fill the hollow light-pervious area 221 so that one side of the adhesive layer 23, opposite the printed layer 22, is a flat surface. The lower light-pervious substrate 24 is disposed at the side of the adhesive layer 23 opposite the printed layer 22. An edge of the screen protector 20 is provided with a curved section 25 corresponding to a curved surface 6 of the edge of the screen 2. The curved section 25 is bent toward one side of the lower light-pervious substrate 24 opposite the adhesive layer 23. Thereby, the screen protector 20 can be easily positioned to fully protect the screen 2.

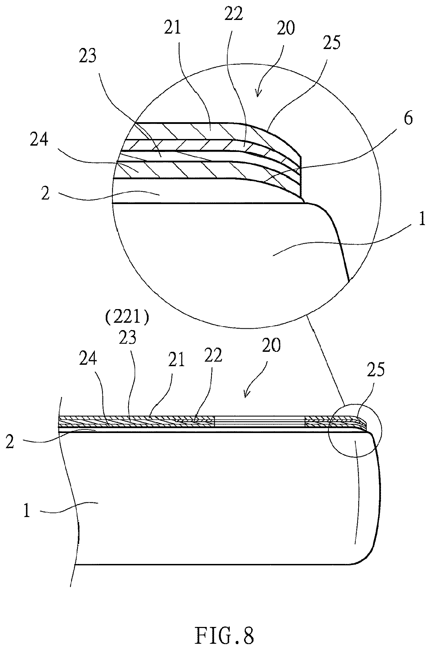

The assembly, the function and the details of the aforesaid embodiment are as follows. As shown in FIG. 6 to FIG. 8, in this embodiment, the upper and lower light-pervious substrates 21, 24 of the screen protector 20 are made of poly ethylene terephthalate (PET), polyethylene (PE), polycarbonate (PC), or polyvinyl chloride (PVC). The adhesive layer 23 is made of highly transparent and hardenable acrylic, epoxy or silicone by coating. When the screen protector 20 is to be attached to the screen 2 of the electronic device 1, first, the screen protector 20 is placed above the electronic device 1, and the light-pervious area 221 is aligned with the edge of the screen 2, and then the screen protector 20 is slowly put down to be accurately attracted to the screen 2 of the electronic device 1 to complete the bonding operation of the screen protector 20. This can prevent the screen protector 20 from be re-affixed again because of skewing to result in that the screen protector 20 absorbs dust because the adhesive surface is in contact with the air for a long time and that the screen protector 20 has fingerprints. The curved section 25 is made of plastics by thermoforming. The curved section 25 is configured to cover the curved surface 6 of the screen 2 (as shown in FIG. 8), so that the screen protector 20 won't be lifted up or torn off easily due to an unexpected collision. The edge of the screen 2 won't be directly hit by an external force of any direction or angle because the screen 2 is fully covered and protected by the curved section 25. When the screen 2 of the electronic device 1 is impacted, the damage will be minimized, thereby prolonging the service life of the screen. Furthermore, the printed layer 22 may be formed with various patterns and colors by different pigments to exhibit a translucent or opaque texture for decorating the electronic device 1 in a different style to add variety.

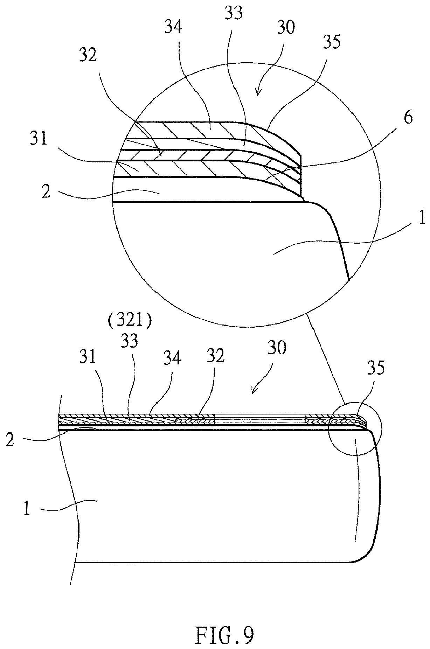

FIG. 9 illustrates another embodiment of the present invention. A screen protector 30 comprises a lower light-pervious substrate 31, a printed layer 32, an adhesive layer 33, and an upper light-pervious substrate 34. The printed layer 32 is disposed at one side of the lower light-pervious substrate 31. The printed layer 32 has a hollow light-pervious area 321. The light-pervious area 321 corresponds in shape to a screen 2 of an electronic device 1. The adhesive layer 33 is disposed at one side of the printed layer 32 opposite the lower light-pervious substrate 31. The adhesive layer 33 is configured to fill the hollow light-pervious area 321 so that one side of the adhesive layer 33, opposite the printed layer 32, is a flat surface. The upper light-pervious substrate 34 is disposed at the side of the adhesive layer 33 opposite the printed layer 32. An edge of the screen protector 30 is provided with a curved section 35 corresponding to a curved surface 6 of the edge of the screen 2. The curved section 35 is bent toward one side of the lower light-pervious substrate 31 opposite the printed layer 32. Thereby, the screen protector 30 can be easily and accurately attached to the screen 2 to fully protect the screen 2.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A screen protector (20), comprising an upper light-pervious substrate (21), a printed layer (22), an adhesive layer (23), and a lower light-pervious substrate (24); the printed layer (22) being disposed at one side of the upper light-pervious substrate (21), the printed layer (22) having a hollow light-pervious area (221); the adhesive layer (23) being disposed at one side of the printed layer (22) opposite the upper light-pervious substrate (21), the adhesive layer (23) being configured to fill the hollow light-pervious area (221) so that one side of the adhesive layer (23), opposite the printed layer (22), is a flat surface; the lower light-pervious substrate (24) being disposed at the side of the adhesive layer (23) opposite the printed layer (22); an edge of the screen protector (20) being provided with a curved section (25) corresponding to a curved surface (6) of an edge of a screen (2).

2. The screen protector (20) as claimed in claim 1, wherein the light-pervious area (221) corresponds in shape to the screen (2).

3. The screen protector (20) as claimed in claim 1, wherein the curved section (25) is bent toward one side of the lower light-pervious substrate (24) opposite the adhesive layer (23).

4. The screen protector (20) as claimed in claim 1, wherein the upper light-pervious substrate (21) and the lower light-pervious substrate (24) are made of one of poly ethylene terephthalate (PET), polyethylene (PE), polycarbonate (PC), and polyvinyl chloride (PVC).

5. The screen protector (20) as claimed in claim 1, wherein the printed layer (22) is formed with various patterns and colors by translucent or opaque pigments.

6. The screen protector (20) as claimed in claim 1, wherein the adhesive layer (23) is made of highly transparent and hardenable acrylic, epoxy or silicone by coating.

7. The screen protector (20) as claimed in claim 1, wherein the curved section (25) is formed by thermoforming.

8. A screen protector (30), comprising a lower light-pervious substrate (31), a printed layer (32), an adhesive layer (33), and an upper light-pervious substrate (34); the printed layer (32) being disposed at one side of the lower light-pervious substrate (31), the printed layer (32) having a hollow light-pervious area (321); the adhesive layer (33) being disposed at one side of the printed layer (32) opposite the lower light-pervious substrate (31), the adhesive layer (33) being configured to fill the hollow light-pervious area (321) so that one side of the adhesive layer (33), opposite the printed layer (32), is a flat surface; the upper light-pervious substrate (34) being disposed at the side of the adhesive layer (33) opposite the printed layer (32); an edge of the screen protector (30) being provided with a curved section (35) corresponding to a curved surface (6) of an edge of a screen (2).

9. The screen protector (20) as claimed in claim 8, wherein the light-pervious area (321) corresponds in shape to the screen (2).

10. The screen protector (20) as claimed in claim 8, wherein the curved section (35) is bent toward one side of the lower light-pervious substrate (31) opposite the printed layer (32).
